# EUROPÄISCHE PATENTANMELDUNG

(11) **EP 2 068 587 A2**
(43) Veröffentlichungstag der Anmeldung: **10.06.2009**
(21) Anmeldenummer: 08166991.3
(22) Anmeldetag: 20.10.2008
(51) Int. Cl.: H04R 25/02

(54) **Stirnplatte mit Verschlussvorrichtung**

(30) Priorität: 07.12.2007 DE 102007058987
(71) Anmelder: Siemens Medical Instruments Pte. Ltd., Singapore 139959 (SG)
(72) Erfinder: Sauer, Joseph, 96129 Strullendorf (DE); Schmidt, Benjamin, 90419 Nürnberg (DE); Schmitt, Christian, 91091 Grossenseebach (DE)
(74) Vertreter: Maier, Daniel Oliver

(57) **Zusammenfassung**

Die Erfindung gibt eine Verschlussvorrichtung (1) für eine Mikrofonöffnung (6) in einer Stirnplatte (5) an. Sie umfasst ein Schall durchlässiges Abdeckmittel (2) aus einem ersten Material und eine Schall durchlässige Membran (4), wobei ein außen am Abdeckmittel (2) angeordnetes Dichtungsmittel (3) aus einem zweiten Material derart ausgebildet ist, dass es beim Einsetzen des Abdeckmittels (2) in die Mikrofonöffnung (6) einen dichten Formschluss zwischen Abdeckmittel (2) und Stirnplatte (5) herstellt. Eine zur erfindungsgemäßen Verschlussvorrichtung (1) passende Stirnplatte (5) wird ebenfalls angegeben.

Vorteilhaft daran ist, dass die Mikrofonöffnung (6) feuchtigkeitsdicht verschließbar ist und dadurch ein darunter befindliches Mikrofon gegen äußere Einflüsse schützt.

## Beschreibung

Die Erfindung betrifft eine im Patentanspruch 1 angegebene Verschlussvorrichtung für eine Stirnplatte eines In-dem-Ohr Hörgeräts oder eines Ohrpassstückes eines Hinter-dem-Ohr Hörgeräts sowie ein im Patentanspruch 9 angegebenes Hörgerät.

Bei In-dem-Ohr Hörgeräten werden Bauelemente, wie zum Beispiel Mikrofon, Verstärker oder Lautsprecher, in einer Gehäuseschale eines Ohrpassstücks, die entsprechend dem Gehörgang des Hörgeräteträgers geformt ist, integriert. Die Gehäuseschale ist frontseitig mit einer Stirnplatte abgeschlossen, in der beispielsweise eine Mikrofonöffnung zum Durchlass des aufzunehmenden Schalls angeordnet ist.

Um das Eindringen von Cerumen und Feuchtigkeit in das Innere des Hörgeräts zu verhindern, müssen alle Öffnungen, insbesondere die Mirkophonöffnung, mit geeigneten Schall durchlassenden Mitteln verschlossen werden.

In der Gebrauchsmusterschrift DE G 84 36 783 wird eine Schutzvorrichtung zum Eindringen von Cerumen offenbart, welche aus Lochkappen besteht, die auf die Schallaustrittstutzen entweder direkt eines In-dem-Ohr Hörgeräts oder einem in das Ohr einsetzbaren Ohrpassstückes eines Hinter-dem-Ohr Hörgeräts aufbringbar sind.

In der Patentschrift EP 0 310 866 A1 wird eine Vorrichtung zum Verschließen von Öffnungen in Hörgeräten oder in Ohrpassstücken für Hörgeräte, insbesondere Öffnungen in einem Stirndeckel für den Schalleintritt, den Schallaustritt oder der Belüftung beschrieben. Die angegebene Verschlussvorrichtung umfasst unter anderem eine aufschraubbare Kappe oder eine Einschnappkappe. In die jeweilige Öffnung ist eine mikroporöse Membrane aus nicht haftendem Material einsetzbar.

Stirnplatten bzw. Stirndeckel, auch Faceplate genannt, werden heutzutage in der Regel aus Kunststoff gespritzt oder in einem Stereolithografieverfahren aus einem oder mehreren Kunststoffen aufgebaut. In der nachveröffentlichten Patentschrift DE 10 2007 053 540.8 der Anmelderin werden derartige Faceplates und dazugehörige Gehäusemodule sowie deren Herstellung beschrieben.

Die US 4972488 beschreibt verschiedene Schutzkappen zum Verhindern des Eindringens von Ohrschmalz in den akustischen Ausgang hinter dem Hörer bei einem In-dem-Ohr-Hörgerät. Die Schutzkappe weist an ihrer Außenseite mehrere kalottenförmige Flansche auf, die in eine Nut in einer Gehäuseschale eingreifen und somit einen Formschluss herstellen können.

Des Weiteren gibt die EP 1458217 A2 ein akustisches Filterelement an, das in eine akustische Ausgangsöffnung eines Hörgeräts eingesetzt werden kann. Eine aus Kunststoff bestehende Membran hat einen kragenförmigen Abschnitt mit Öffnungen für den Schalldurchlass, der von einem ringförmigen Abschnitt umgeben ist.

Außerdem offenbart die EP 1429733 A1 einen aus Kunststoff bestehenden Mikrofonschutz, der aus einem Ring mit zum Zentrum hin verlaufenden und dort miteinander verbundenen Stegen besteht, wobei zwischen dem Ring und den Stegen eine Öffnung gebildet wird. Im Bereich der Öffnungen des Mikrofonschutzes ist ein zusätzliches Filter vorgesehen.

Eine Aufgabe der Erfindung besteht darin, eine weitere Verschlussvorrichtung anzugeben, welche einfach und kostengünstig herstellbar ist und eine Mikrofonöffnung sicher vor dem Eindringen von Feuchtigkeit und Cerumen schützt. Die erfindungsgemäße Vorrichtung soll auch zum Einbau in eine im Spritzgussverfahren herstellbare Stirnplatte geeignet sein.

Gemäß der Erfindung wird die gestellte Aufgabe mit der Vorrichtung des unabhängigen Patentanspruchs 1 gelöst, indem eine Verschlussvorrichtung für eine Mikrofonöffnung einer Stirnplatte ein Schall durchlässiges Abdeckmittel aus einem ersten Material und eine Schall durchlässige Membran umfasst. Außen am Abdeckmittel ist ein Dichtungsmittel aus einem zweiten Material angeordnet. Es bewirkt beim Einsetzen des Abdeckmittels in die Mikrofonöffnung einen dichten Formschluss zwischen dem Abdeckmittel und der Stirnplatte.

Dies hat den Vorteil einer einfach und preiswert herzustellenden Verschlussvorrichtung, welche lösbar und dicht in eine Mikrofonöffnung einsetzbar ist.

In einer Weiterbildung kann der Formschluss luft- und wasserdicht und die Membran aus einem mikroporösen und wasserabweisenden Material bestehen.

Dadurch kann weder Wasserdampf noch Cerumen in das Innere eines Hörgeräts gelangen.

Bei einer weiteren Ausführungsform der Erfindung kann das Abdeckmittel kreiszylinderförmig sein und das Dichtungsmittel kann einen das Abdeckmittel umschließenden Dichtungsring umfassen.

Dies hat den Vorteil, dass kreisrunde Mirkofonöffnungen sicher und dicht verschlossen werden können, und das darunterliegende Mikrofon vor äußeren Einflüssen geschützt wird.

In einer Weiterbildung kann das Dichtungsmittel unlösbar fest mit dem Abdeckmittel verbunden sein.

Dadurch kann es sich nicht vom Abdeckmittel lösen und ist mit diesem formschlüssig dicht.

Weiters kann das zweite Material aus Silikon bestehen.

Vorteilhaft daran ist, dass so das Dichtungsmittel zusammen mit dem Abdeckmittel einfach in einem 2-Komponenten Spritzgussverfahren herstellbar ist.

In einer weiteren Ausführungsform kann das Abdeckmittel eine erste Nut zur Aufnahme des Dichtungsmittels aufweisen.

Dies verbessert den Sitz des Dichtungsmittels auf dem Abdeckmittel.

In einer Weiterbildung kann die Membran auf der Unterseite des Abdeckmittels aufgeklebt sein.

Dadurch liegt die Membran dicht am Abdeckmittel an.

Das Abdeckmittel kann auch mehrere durchgehende Öffnungen aufweisen.

Durch diese können Schallwellen nahezu ungehindert zur dichtenden Membran und in das Innere eines Hörgeräts gelangen.

In einer weiteren Ausführungsform kann das Abdeckmittel zur Befestigung in der Mikrofonöffnung ein Außengewinde oder eine oder mehrere Schnappnasen an der Unterseite des Abdeckmittels aufweisen.

Vorteilhaft daran ist, dass das Verschlussmittel zerstörungsfrei aus der Mikrofonöffnung entfernbar ist.

Eine weitere Aufgabe der Erfindung besteht darin, eine zur erfindungsgemäßen Verschlussvorrichtung passende Stirnplatte anzugeben.

Gemäß der Erfindung wird die gestellte Aufgabe gelöst, indem eine Mikrofonöffnung einer Stirnplatte so ausgebildet ist, dass nach dem Einsetzen einer erfindungsgemäßen Verschlussvorrichtung in die Mikrofonöffnung das Dichtungsmittel einen Formschluss mit dem Aufnahmemittel bildet.

Dies hat den Vorteil, dass die Stirnplatte und die Verschlussvorrichtung optimal zusammenpassen.

In einer Weiterbildung kann der Formschluss lösbar sein, damit die Verschlussvorrichtung zerstörungsfrei entfernbar ist.

Des Weiteren kann die Mikrofonöffnung eine zweite Nut zur Aufnahme des Dichtungsmittels aufweisen.

Dadurch schließt das Dichtungsmittel optimal.

Die Erfindung umfasst auch ein Hörgerät mit einer erfindungsgemäßen Verschlussvorrichtung und einer erfindungsgemäßen Stirnplatte.

Weitere Besonderheiten der Erfindung werden aus den nachfolgenden Erläuterungen mehrerer Ausführungsbeispiele anhand von schematischen Zeichnungen ersichtlich.

### Es zeigen:

- Figur 1a:: einen Schnitt durch ein In-dem-Ohr Hörgerät,
- Figur 1b:: eine vergrößerte Detailansicht aus Figur 1,
- Figur 2:: eine perspektivische Ansicht eine Verschlussvorrichtung,
- Figur 3:: eine Schnittansicht einer Verschlussvorrichtung,
- Figur 4:: eine perspektivische Ansicht einer in eine Stirnplatte eingebauten Verschlussvorrichtung,
- Figur 5:: eine Schnittansicht einer in eine Stirnplatte eingebauten Verschlussvorrichtung
- Figur 6:: eine Schnittansicht durch eine Mikrofonöffnung,
- Figur 7:: eine perspektivische Ansicht einer weiteren Verschlussvorrichtung,
- Figur 8:: eine Schnittansicht einer weiteren Verschlussvorrichtung und
- Figur 9:: eine Verschlussvorrichtung mit Schnappnasen.

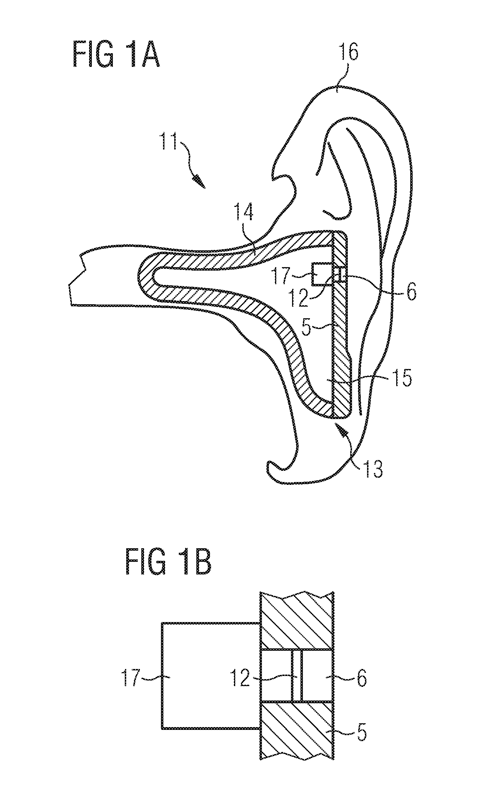

Figur 1a zeigt ein erfindungsgemäßes In-dem-Ohr Hörgerät 11 mit einem Hörgerätegehäuse 13 im Schnitt, welches im Ohr 16 des Hörgeräteträgers eingesetzt ist. Das Hörgerätegehäuse 13 umfasst eine Gehäuseschale 14 und eine mit dieser verbundenen Stirnplatte 5, welche zur Öffnung der Ohrmuschel des Ohrs 16 hin angeordnet ist. In dem durch die Gehäuseschale 14 und die Stirnplatte 5 gebildeten Hohlraum 15 ist eine nicht näher dargestellte Hörgeräteelektronik integriert. Die Stirnplatte 5 weist eine Mikrofonöffnung 6 zum Schalldurchlass auf. Im Hohlraum ist ein Mikrofon 17 angeordnet. Es ist mit der Stirnplatte 5 verklebt. Das Mikrofon 17 sitzt genau unter der Schalleintrittsöffnung 6. In der Mikrofonöffnung 6 ist eine halbzylindrische zweite Nut 12 zu erkennen.

In Figur 1b ist die Mikrofonöffnung 6 aus Figur 1a vergrößert dargestellt. Das Mikrofon 17 ist an der Unterseite der teilweise dargestellten Stirnplatte 5 unterhalb der Mikrofonöffnung 6 befestigt, beispielsweise geklebt. Deutlich ist die zweite Nut 12 zur formschlüssigen Aufnahme eines Dichtungsmittels erkennbar. Die zweite Nut 12 ist in die Innenwand der Mikrofonöffnung 6 integriert.

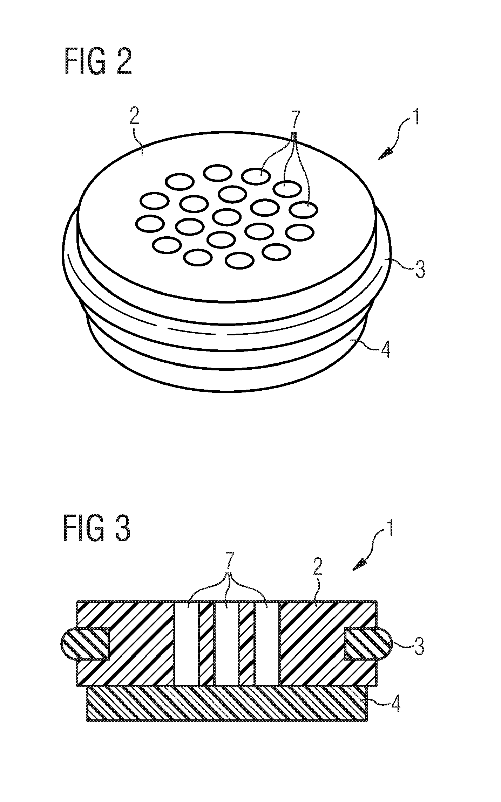

Eine perspektivische Ansicht einer erfindungsgemäßen Verschlussvorrichtung 1 ist in Figur 2 dargestellt. Die Verschlussvorrichtung 1 umfasst ein kreiszylinderförmiges Abdeckmittel 2, auf dessen Zylinderwand ein wulstförmiges Dichtungsmittel 3 fest angebracht ist. Das Abdeckmittel 2 weist eine Vielzahl von Bohrungen 7 auf, durch welche der Schall ungehindert durchtreten kann. Auf der Unterseite des Abdeckmittels 2 ist eine wasserabweisende, schalldurchlässige Membran 4 geklebt. Die Klebung erfolgt vorzugsweise nur im Randbereich der Membran, um die Schallleitung nicht ungünstig zu beeinflussen.

Das Dichtungsmittel 3 wird vorzugsweise aus einem zweiten Material, beispielsweise Silikon, gemeinsam mit dem Abdeckmittel 2 aus einem ersten Material in einem vorbekannten ZweiKomponenten Spritzgussverfahren hergestellt.

Figur 3 zeigt einen Schnitt durch die Verschlussvorrichtung 1 aus Figur 2. Zu erkennen sind das Abdeckmittel 2 mit den Kanälen der Schalldurchlass-Öffnungen 7 sowie das mit dem Abdeckmittel 2 fest verbundene Dichtungsmittel 3 und die angeklebte Membran 4. Das Dichtungsmittel 3 ist in einer ersten Nut in der zylindrischen Außenfläche des Abdeckmittels 2 eingebracht.

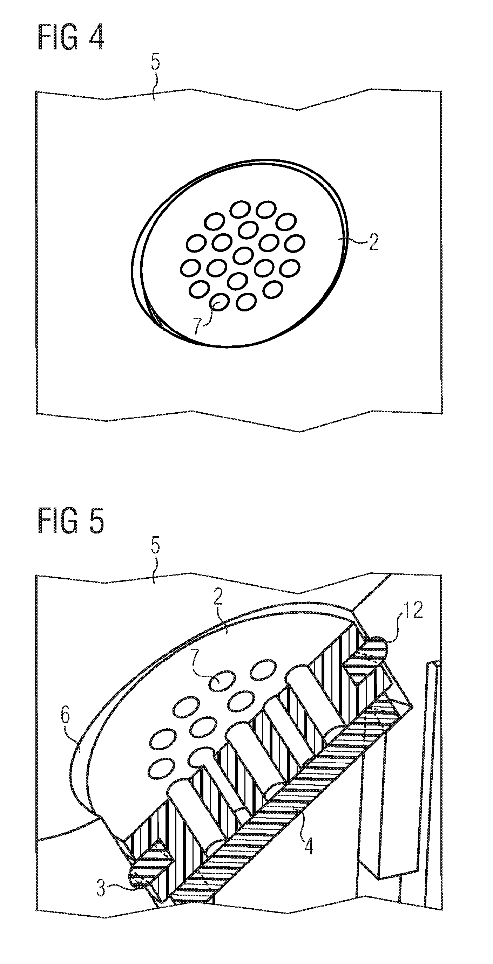

In Figur 4 ist die Verschlussvorrichtung 1 der Figuren 2 und 3, eingebaut in eine Stirnplatte 5, dargestellt. Zu erkennen ist die Außenseite des Abdeckmittels 2 mit den darin integrierten Öffnungen 7 in Form von durchgängigen Bohrungen. Die Verschlussvorrichtung 1 kann plan mit der Oberfläche der Stirnplatte 5 abschließen oder eine kleine Stufe aufweisen. Die Verschlussvorrichtung 1 kann durch Schraubung oder einen Schnappverschluss fest mit der Stirnplatte 5 verbunden sein. Die Verbindung ist derart gestaltet, dass infolge des Dichtungsmittels 3 keine Feuchtigkeit in das Innere 15 der Gehäuseschale 13 (siehe Figur 1a) gelangen kann.

In Figur 5 ist das Prinzip dieser Abdichtung näher dargestellt. Die Figur zeigt eine Teilansicht eines Schnittes durch eine in eine Stirnplatte 5 eingepasste erfindungsgemäße Verschlussvorrichtung 1. Das in dem Abdeckmittel 2 integrierte Dichtungsmittel 3 passt formschlüssig in eine rillenförmige zweite Nut 12 in der Mikrofonöffnung 6. Dadurch entsteht eine Feuchtigkeit sperrende Abdichtung. Auf der Unterseite ist eine wasserabweisende Membran 4, welche die Öffnungen 7 in dem Abdeckmittel 2 verschließt, zu erkennen.

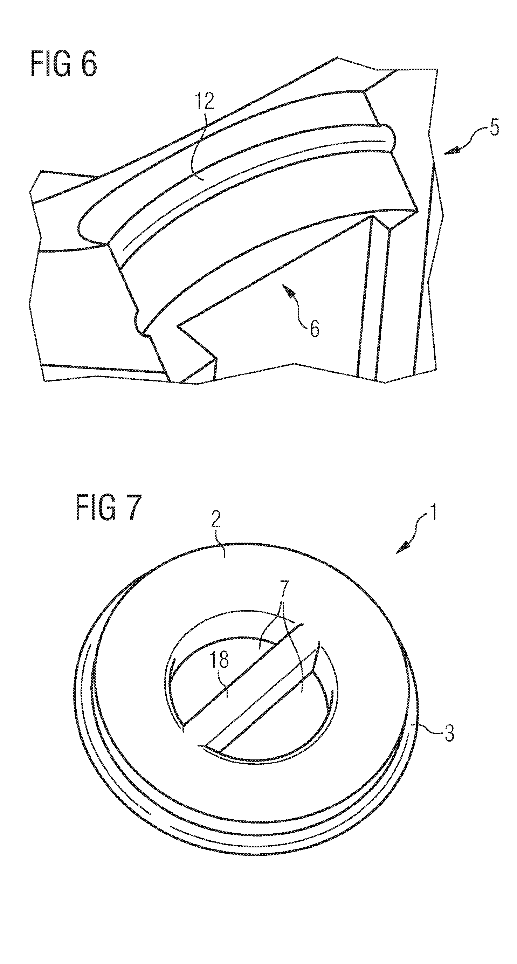

Figur 6 zeigt einen Schnitt durch eine Stirnplatte 5 an der Stelle der Mikrofonöffnung 6. Auf der Innenseite der Mikrofonöffnung ist eine rillenförmige zweite Nut 12 eingebracht. In diese passt formschlüssig das Dichtungsmittel 3 der Verschlussvorrichtung 1 aus Figur 5.

Eine weitere Ausführungsform der erfindungsgemäßen Verschlussvorrichtung 1 ist in Figur 7 perspektivisch dargestellt. Anstelle der Vielzahl von Bohrungen in dem Abdeckmittel 2 sind nur zwei halbkreisförmige Öffnungen 7 zum Durchlass des Schalls vorgesehen. Die beiden Öffnungen 7 werden durch einen Steg 18 getrennt. Der Steg 18 kann zum Ansetzen eines Werkzeugs zum Entfernen und Einpassen der Verschlussvorrichtung 1 verwendet werden. Der Steg 18 dient auch zum sicheren Befestigen einer in Figur 7 nicht sichtbaren Membran 4 an der Unterseite 10 des Abdeckmittels. Deutlich ist das auf dem zylinderförmigen Rand des Abdeckmittels angebrachte Dichtungsmittel 3 zu erkennen.

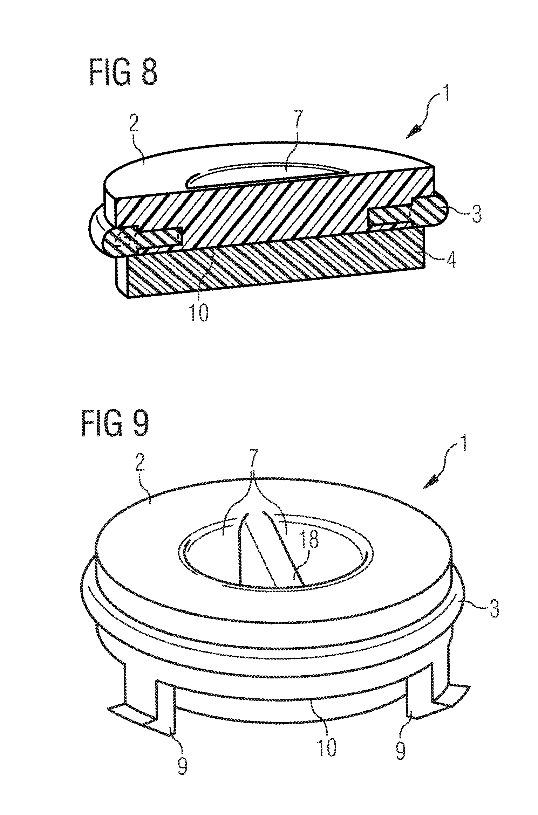

Figur 8 zeigt einen Schnitt durch die Verschlussvorrichtung 1 aus Figur 7. Sichtbar sind die Öffnung 7 in dem Abdeckmittel 2 sowie das Dichtungsmittel 3 und die auf der Unterseite 10 angebrachte Membran 4.

Zum sicheren Halt der Verschlussvorrichtung 1 in einer Stirnplatte 5 sind Befestigungsmittel erforderlich. Beispielsweise kann dies durch ein Gewinde an der Außenwand des Abdeckmittels, welches in ein Innengewinde der Mikrofonöffnung 6 greift, sicher gestellt werden. Figur 9 zeigt eine weitere Lösung mit einem Schnappverschluss. Dazu weist die Verschlussvorrichtung 1 aus den Figuren 5 und 6 eine oder mehrere Schnappnasen 9 an der Unterseite 10 des Abdeckmittels 2 auf. Die Schnappnasen 9 greifen in einen oder mehrere korrespondierende Vorsprünge oder in entsprechende Vertiefungen der in Figur 9 nicht dargestellten Stirnplatte 5. Sichtbar sind auch die Öffnungen 7 und das Dichtungsmittel 3.

### Bezugszeichenliste

- 1: Verschlussvorrichtung
- 2: Abdeckmittel
- 3: Dichtungsmittel
- 4: Membran
- 5: Stirnplatte
- 6: Mikrofonöffnung
- 7: Öffnung
- 8: Mikrofon
- 9: Schnappnase
- 10: Unterseite
- 11: In-dem-Ohr Hörgerät
- 12: zweite Nut in der Mikrofonöffnung 6
- 13: Hörgerätegehäuse
- 14: Gehäuseschale
- 15: Hohlraum
- 16: Ohr
- 17: Mikrofon
- 18: Steg

## Patentansprüche

1. Verschlussvorrichtung (1) für eine Mikrofonöffnung (6) einer Stirnplatte (5) umfassend ein Schall durchlässiges Abdeckmittel (2) aus einem ersten Material und eine Schall durchlässige Membran (4), wobei ein außen am Abdeckmittel (2) angeordnetes Dichtungsmittel (3) aus einem zweiten Material derart ausgebildet ist, dass es beim Einsetzen des Abdeckmittels (2) in die Mikrofonöffnung (6) einen dichten Formschluss zwischen Abdeckmittel (2) und Stirnplatte (5) herstellt,
**dadurch gekennzeichnet,**
**dass** das Dichtungsmittel (3) einen das Abdeckmittel (2) umschließenden Dichtungsring umfasst und unlösbar fest mit dem Abdeckmittel (2) verbunden ist.

2. Verschlussvorrichtung (1) nach Anspruch 1,
**dadurch gekennzeichnet,**
**dass** der Formschluss luft- und wasserdicht ist und die Membran (4) aus einem mikroporösen und wasserabweisenden Material besteht.

3. Verschlussvorrichtung (1) nach Anspruch 1 oder 2,
**dadurch gekennzeichnet,**
**dass** das Abdeckmittel (2) kreiszylinderförmig ist.

4. Verschlussvorrichtung (1) nach einem der vorigen Ansprüche,
**dadurch gekennzeichnet,**
**dass** das zweite Material Silikon ist.

5. Verschlussvorrichtung (1) nach einem der vorigen Ansprüche,
**dadurch gekennzeichnet,**
**dass** das Abdeckmittel (2) eine erste Nut zur Aufnahme des Dichtungsmittels (3) aufweist.

6. Verschlussvorrichtung (1) nach einem der vorigen Ansprüche,
**dadurch gekennzeichnet,**
**dass** die Membran (4) auf der Unterseite (10) des Abdeckmittels (2) aufklebbar ist.

7. Verschlussvorrichtung (1) nach einem der vorigen Ansprüche,
**dadurch gekennzeichnet,**
**dass** das Abdeckmittel (2) mehrere durchgehende Öffnungen (7) aufweist.

8. Verschlussvorrichtung (1) nach einem der vorigen Ansprüche,
**dadurch gekennzeichnet,**
**dass** das Abdeckmittel (2) zur Befestigung in der Mikrofonöffnung (6) ein Außengewinde oder ein oder mehrere an der Unterseite (10) angeordnete Schnappnasen (9) aufweist.

9. Hörgerät (11) mit einer Verschlussvorrichtung (1) nach einem der Ansprüche 1 bis 8.

10. Stirnplatte (5) mit einer Mikrofonöffnung (6) für ein Indem-Ohr Hörgerät (11) oder für ein Ohrpassstück eines Hinter-dem-Ohr Hörgeräts,
**dadurch gekennzeichnet,**
**dass** die Mikrofonöffnung (6) derart ausgebildet ist, dass nach dem Einsetzen einer Verschlussvorrichtung (1) nach einem der Ansprüche 1 bis 9 in die Mikrofonöffnung (6) das Dichtungsmittel (3) einen Formschluss mit der Stirnplatte (5) bewirkt.

11. Stirnplatte (5) nach Anspruch 10,
**dadurch gekennzeichnet,**
**dass** der Formschluss lösbar ist.

12. Stirnplatte (5) nach Anspruch 10 oder 11,
**dadurch gekennzeichnet,**
**dass** die Mirkofonöffnung (6) eine zweite Nut (12) zur Aufnahme des Dichtungsmittels (3) aufweist.

13. Hörgerät (11) mit einer Verschlussvorrichtung (1) nach einem der Ansprüche 1 bis 9 und einer Stirnplatte (5) nach einem der Ansprüche 10 bis 12.
